# FASCICULE DE BREVET EUROPEEN

(11) **EP 2 028 039 B1**
(45) Date de publication et mention de la délivrance du brevet: **14.10.2015**
(21) Numéro de dépôt: 08356094.6
(22) Date de dépôt: 23.06.2008
(51) Int. Cl.: B60N 2/12, B60N 2/06, B60N 2/30

(54) **Siège escamotable notamment pour véhicule automobile**
Versenkbarer Sitz, insbesondere für Kraftfahrzeug
Retractable seat, in particular for an automobile

(30) Priorité: 22.06.2007 FR 0704489
(43) Date de publication de la demande: 25.02.2009
(73) Titulaire: Grupo Antolin-Ingenieria, S.A., 09080 Burgos (ES)
(72) Inventeur: Gagnaire, Eric, 42600 Savigneux (FR); Zuzino, Eric, 42000 Saint Etienne (FR)
(74) Mandataire: Delorme, Nicolas

(56) Documents cités:
- EP-A- 1 500 550
- WO-A-2006/053657
- WO-A1-2007/115413
- WO-A2-2008/015526
- DE-U1-202006 005 525

## Description

La présente invention concerne un siège escamotable notamment pour un véhicule automobile.

Il est bien connu d'équiper un véhicule automobile de sièges dont la structure leur permet d'occuper une position déployée ou, selon les besoins de l'utilisateur, une position escamotée dans le plancher du véhicule.

En position déployée, le siège se doit d'offrir des conditions d'assise confortables pour un passager. A ce titre il importe que le siège soit équipé d'éléments de garniture épais.

Par ailleurs, certains types de véhicules possèdent trois rangées de sièges numérotées de un à trois par rapport au sens de déplacement du véhicule. Dans ce type de véhicules, les portes arrière donnent accès à la fois aux sièges de rang 2 et aux sièges de rang 3. Pour faciliter l'accès aux sièges de rang 3, les sièges de rang 2 ont généralement une structure qui autorise une position dite APA (Accès Place Arrière). L'assise du siège étant généralement liée au dossier du siège, la rotation vers l'avant du dossier qui dégage de l'espace pour l'accès au plan arrière entraîne une avancée de l'assise.

Cette avancée de l'assise n'est pas souhaitable dans la mesure où l'assise peut alors entrer en collision avec le siège de rang 1. Cette collision est d'autant plus inévitable que les éléments de garniture sont volumineux.

On connait par le document EP-A-1 500 550 A2 un siège possédant une cinématique permettant au dossier de se rabattre sur l'assise. La rotation du dossier entraine une avancée de l'assise.

Le document WO 2006/053657 A1(correspondant au préambule de la revendication indépendante 1 de produit) décrit un siège qui comprend une section milieu qui supporte un coussin d'assise et un dossier articulé sur la section milieu et/ou le coussin d'assise

Le document DE-U-20 2006 005 525 montre un siège qui peut présenter deux configurations d'escamotage à savoir une configuration portefeuille dans laquelle le dossier est rabattu sur l'assise et une configuration cinéma dans laquelle le l'assise est basculée à la vertical contre le dossier.

Il apparaît donc que des évolutions sont souhaitables dans le domaine des sièges escamotables.

Un but de l'invention est de proposer un siège qui, tout en étant équipé d'éléments de garniture volumineux, peut occuper différentes positions et peut notamment être placé en position d'accès place arrière sans pour autant interférer avec d'autre sièges ou d'autres éléments de mobilier présents dans le véhicule.

L'invention, qui est définie par les caractéristiques techniques de ladite revendication indépendante, a pour objet un siège escamotable notamment pour un véhicule automobile comprenant :
- un châssis destiné à être relié à un plancher du véhicule, le châssis présentant une partie avant et une partie arrière,
- une assise ayant un pied avant relié à la partie avant du châssis et des moyens formant pied arrière relié à la partie arrière du châssis, l'assise étant mobile entre une position d'utilisation dans laquelle l'assise est maintenue sensiblement parallèle au plancher et en hauteur par rapport à celui-ci et une position d'escamotage dans laquelle l'assise est sensiblement en appui sur le plancher et en avant du châssis,
- un dossier relié par une liaison pivot à l'extrémité arrière du châssis, le dossier étant mobile angulairement par rapport au châssis entre une position confort arrière et une position d'escamotage dans laquelle le dossier est parallèle au plancher, le dossier pouvant occuper entre ces positions extrêmes une position nominale dans laquelle le dossier forme un angle légèrement obtus avec l'assise et une position d'accès place arrière APA dans laquelle le dossier forme un angle légèrement aigu avec l'assise,
- une bielle de connexion dont l'une des extrémités est reliée à l'assise et dont l'autre extrémité est reliée au dossier, la fixation de la bielle de connexion avec le dossier étant réalisée par des moyens de liaison permettant, sur la course angulaire du dossier comprise entre la position de confort arrière et la position APA, un découplage du dossier par rapport à l'assise et permettant de lier le déplacement du dossier et le déplacement de l'assise lors de leurs déplacements respectifs vers leur position d'escamotage.

Ainsi, l'invention permet de proposer un siège dont le dossier peut être positionné entre des positions de confort arrière et d'accès place arrière sans que la position de l'assise ne soit modifiée. Il est précisé que ce siège est, par ailleurs escamotable, par une rotation du dossier et par un déplacement de l'assise vers l'avant pour éviter la configuration défavorable en terme d'encombrement de la superposition directe du dossier sur l'assise en position escamotée.

Pour assurer la compatibilité d'éléments de garniture volumineux avec un siège dont la structure permet un escamotage par une rotation du dossier et par un déplacement de l'assise vers l'avant, il est prévu selon l'invention que les moyens de liaison formant pied arrière de l'assise comprennent une première biellette et une seconde biellette reliées entre elles par une liaison pivot, la première biellette étant connectée à l'assise et la seconde biellette étant connectée au châssis, la première biellette étant associée à des moyens de guidage permettant de décomposer le mouvement de l'assise lors de l'escamotage du siège en un mouvement primaire dans lequel la partie arrière de l'assise est tractée en direction du plancher et en un mouvement secondaire dans lequel la partie arrière de l'assise est tractée vers l'avant du châssis.

Ces dispositions font que, lors de l'escamotage du siège, l'assise présente, un mouvement complexe par rapport au châssis tandis que le dossier connaît un mouvement simple de rotation par rapport au châssis. Le mouvement complexe de l'assise prévoit un mouvement primaire d'affaissement de la partie arrière de l'assise qui permet d'éviter une interférence avec les éléments de garniture du dossier ; le mouvement secondaire permet une traction de l'assise vers l'avant du siège.

Des caractéristiques additionnelles de l'invention sont décrites dans les revendications dépendantes.

Dans une forme d'exécution du siège, les moyens de guidage comprennent un axe lié à la première biellette, l'axe étant engagé dans une lumière curviligne qui présente une première portion orientée de manière oblique et descendante par rapport au plancher, prolongée par une deuxième portion courbe dont le concavité est dirigée vers le plancher. Ainsi, chaque portion de la lumière se traduit par un mouvement de l'assise.

Dans une forme de réalisation du siège, les moyens de liaison de la bielle de connexion et du dossier comprennent un flasque d'engrènement possédant une lumière dans lequel sont engagés un doigt distal positionné à l'extrémité de la bielle de connexion et un doigt proximal positionné sur la bielle de connexion à distance du doigt distal, le doigt distal transmettant la rotation du dossier entre la position APA et la position d'escamotage à la bielle de connexion et le doigt proximal transmettant la rotation du dossier entre la position d'escamotage et la position APA à la bielle de connexion.

Cette forme de réalisation permet d'offrir un pilotage de l'assise aussi bien durant l'escamotage que durant le déploiement de l'assise, tout en conservant le découplage du dossier par rapport à l'assise sur le secteur angulaire compris entre les positions confort et APA.

De façon concrète, la lumière du flasque d'engrènement présente
- un segment primaire en arc de cercle centré sur la liaison pivot du dossier sur le châssis,
- un segment intermédiaire de forme arquée et formant sensiblement un T avec le segment primaire,
- un segment secondaire en arc de cercle centré sur la liaison pivot avec un rayon inférieur à celui du segment primaire.

De plus, les moyens de liaison comprennent un bras fixé sur le dossier par une liaison pivot comprenant une première branche sur laquelle est fixé un ressort retenu sur le dossier et une deuxième branche conçue pour venir en appui sur le doigt distal. Le bras sollicité par le ressort a pour effet de garantir le bon accostage de l'assise sur le dossier lors du déploiement du siège.

Dans une autre forme de réalisation du siège, les moyens de liaison de la bielle de connexion et du dossier comprennent une pièce de liaison coaxial avec l'axe de liaison du dossier sur le châssis, ladite pièce de liaison présentant une piste d'appui en arc de cercle centrée sur l'axe de rotation, l'ouverture angulaire de la piste d'appui étant délimitée par deux butées et un doigt fixé sur le dossier qui glisse sur la piste d'appui.

De plus, la pièce de liaison présente une patte qui s'étend radialement formant un bras de levier à laquelle est reliée la bielle de connexion.

On peut noter que la pièce de liaison est libre en rotation par rapport à l'axe de rotation du dossier par rapport au châssis.

Il est prévu que le siège présente des moyens de verrouillage en position déployée.

Dans une forme de réalisation, un crochet est disposé sur le châssis, ledit crochet étant pivotant entre une position de verrouillage dans laquelle le crochet est engagé sur un pion fixé sur l'assise et une position de déverrouillage dans laquelle le crochet, par pivotement, est dégagé du pion.

Il peut également être prévu que le siège présente deux glissières parallèles chacune constituée d'un profilé disposé dans le plancher du véhicule dans lequel est engagé un profilé complémentaire lié au châssis.

Pour sa bonne compréhension, l'invention est décrite en référence au dessin ci annexé représentant à titre d'exemple non limitatif, deux formes de réalisation de sièges selon celle-ci.
Figures 1 à 4 montrent, en perspective, un exemple de réalisation d'un siège selon l'invention, dépourvu d'éléments de garniture dans trois positions, à savoir une position nominale, une position d'accès place arrière APA, et une position escamotée,
Figures 5 à 10 montrent en vue de côté le siège représenté avec des éléments de garniture au cours de son escamotage,
Figures 11 à 13 montrent un premier mode liaison entre une bielle de connexion et un dossier du siège,
Figures 14 à 16 montrent une forme d'exécution de moyens de verrouillage du siège dans sa position déployée.
Figures 17 à 24 montrent un second mode de liaison entre une bielle de connexion et un dossier du siège.

Il est précisé que le siège 1, est décrit par rapport à un référentiel XYZ lié au véhicule présentant une direction longitudinale X par rapport à laquelle sont notamment utilisés les termes « longueur », « avant », « arrière », une direction transversale Y par rapport à laquelle sont notamment utilisés les termes « largeur », « latéral », « transversal » et une direction verticale Z, par rapport à laquelle sont notamment utilisés les termes « supérieur », « inférieur », « hauteur ». Il est également précisé que les pièces du siège qui se retrouvent symétriquement de chaque côté du siège portent les mêmes numéros de référence.

Il est de plus précisé que les éléments communs aux deux formes de réalisation portent des numéros de référence identiques.

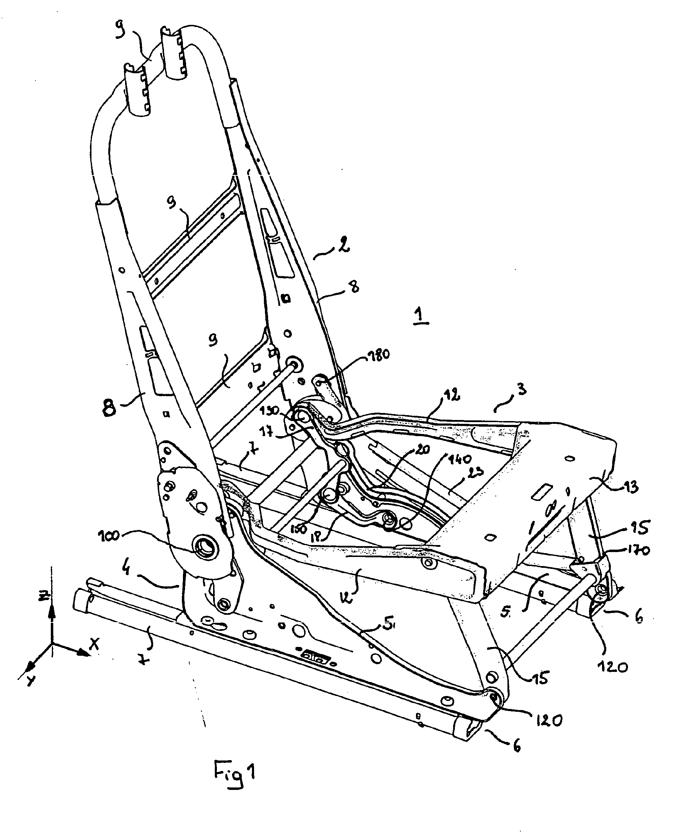

Comme on peut le voir notamment sur la figure 1, le siège 1 selon l'invention comprend un dossier 2 articulé sur un châssis 4 et, indépendante du dossier 2 une assise 3 également articulée sur le châssis 4.

La figure 1, qui fait apparaître le siège sans ses éléments de garniture, montre que le châssis 4 peut être constitué de deux flasques 5 latéraux parallèles. Les deux flasques 5 peuvent être réalisés en acier embouti ou peuvent éventuellement être réalisés en magnésium moulé.

Dans la forme d'exécution du siège illustrée sur les figures, chacun de ses deux flasques 5 latéraux présente une forme sensiblement en triangle rectangle.

On peut également remarquer que le siège 1 peut être monté sur des glissières 6 de façon à pouvoir être positionné de manière réglable dans le véhicule.

Pour cela, chacun des flasques latéraux 5 est doté d'un profilé qui est engagé dans un profilé complémentaire 7 qui peut lui-même être fixé sur un plancher d'un véhicule.

Sur le châssis 4, est articulé le dossier 2 du siège par une liaison pivot 100. Par liaison pivot, on entend une liaison à un degré de liberté, ce degré de liberté étant une rotation. La liaison pivot 100 peut être constituée par deux axes solidaires du dossier 2 qui sont chacun engagés dans un palier pratiqué dans chacun des flasques 5 latéraux.

Le dossier peut être constitué d'une armature métallique ou composite comprenant des montants latéraux 8 reliés par des éléments transversaux 9.

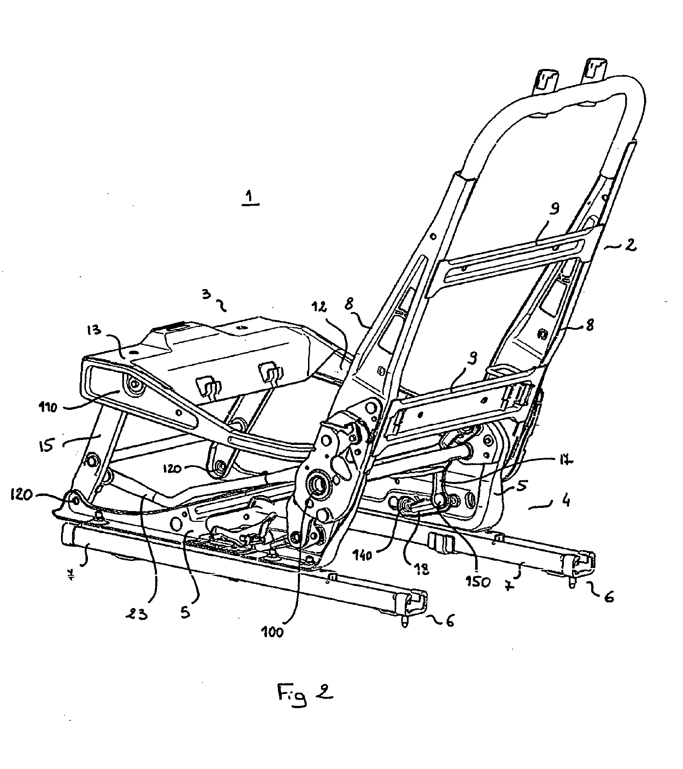

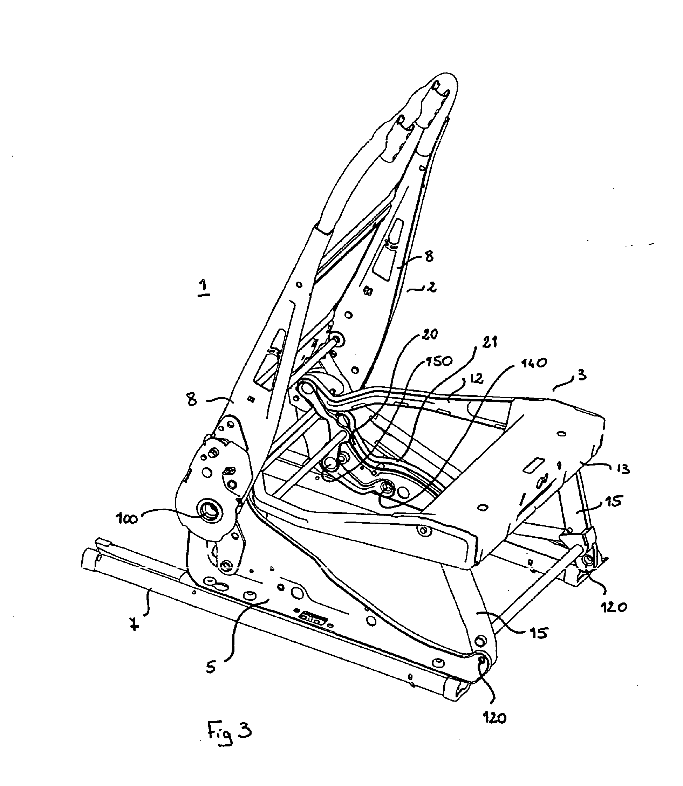

L'assise 3 du siège est elle aussi reliée au châssis 4. L'assise 3 qui comprend, comme on peut le voir sur les figures 1 à 4, deux brancards latéraux 12 reliés par un élément transversal avant 13, est rendue solidaire du châssis 4 par un pied avant et par des moyens formant pied arrière.

Le pied avant est constitué, dans l'exemple représenté, par deux bielles 15 avant ; chacune de ces bielles 15 avant est reliée d'une part, par une liaison pivot 110 à l'avant de l'assise 3 et par une liaison pivot 120 à l'avant de chacun des flasques latéraux 5.

Les liaisons pivots 110 et 120 peuvent être chacune constituées d'un axe présent sur la bielle 15 avant qui vient s'engager dans un palier prévu, respectivement, dans la partie avant de l'assise 3 et dans la partie avant de chacun des deux flasques latéraux 5.

Les moyens formant pied arrière qui supportent l'assise 3 avec les bielles 15 présentent des dispositions tout à fait originales. En effet, il est prévu que les moyens formant pied arrière soient constitués, de chaque côté du siège, par deux biellettes 17 et 18 articulées entre elles ; ces deux biellettes 17 et 18 assurent la liaison entre, respectivement, la partie arrière de chaque brancard latéral 12 formant l'assise 3 et chaque flasque latéral 5 formant le châssis 4.

La première biellette 17, qui est en position supérieure quand on se réfère à la figure 1, est connectée à l'assise 3 par une liaison pivot 130 tandis que la seconde biellette 18, qui est dans une position inférieure, toujours par référence à la figure 1, est connectée à un flasque latéral 5 du châssis 4 par une liaison pivot 140.

Les deux biellettes 17 et 18 sont reliées l'une à l'autre par une liaison pivot 150.

L'ensemble constitué par ces première et deuxième biellettes 17 et 18 articulées entre elles, est guidé par un doigt 19 qui est engagé dans une lumière 20 curviligne.

La lumière 20 curviligne peut être formée dans un élément de tôle 21 qui est rapporté sur la face intérieure de chacun des flasques latéraux 5.

La lumière 20 curviligne présente une configuration spécifique puisqu'elle présente une première portion 20a qui est orientée de manière oblique et descendante en direction du plancher ; cette première portion 20a est poursuivie par une deuxième portion 20b sensiblement horizontale en arc de cercle dont la concavité est dirigée vers le plancher, étant précisé que la configuration de la lumière 20 vient d'être décrite de l'arrière vers l'avant du siège.

On voit donc que, dans le siège selon l'invention, le dossier 2 et l'assise 3 sont chacun fixés sur le châssis 4 indépendamment l'un de l'autre.

Il est donc prévu, par ailleurs que le siège 1 présente des moyens de connexion de l'assise 3 par rapport au dossier 2. Dans l'exemple illustré, ces moyens de connexion comprennent une bielle de connexion 23 qui est, d'une part, reliée par une liaison pivot 170 à une des bielles avant 15 formant pied avant du siège et, d'autre part, l'autre extrémité est reliée au dossier 2 du siège par une liaison pivot 180.

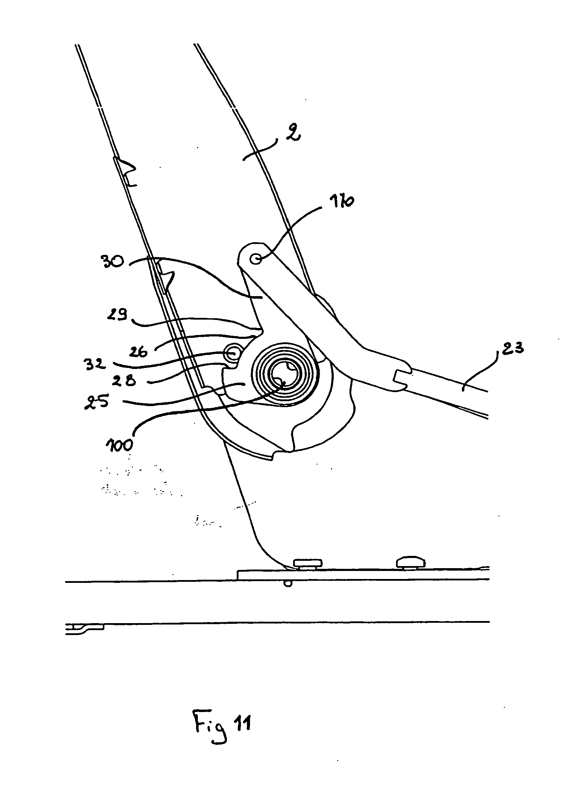

La liaison entre la bielle de connexion 23 et le dossier 2 du siège est plus particulièrement représentée aux figures 11 à 13.

Sur ces figures, on peut voir qu'une pièce de liaison 25 est engagée sur l'axe de rotation de la liaison pivot 100 autour duquel le dossier 2 est articulé sur le châssis 4. La pièce de liaison 25 est libre en rotation par rapport à la liaison pivot 100.

Comme on peut le voir sur ces figures, la pièce de liaison 25 présente une piste d'appui 26 en arc de cercle centrée sur l'axe de rotation de la liaison pivot 100 ; cette piste d'appui 26 est limitée angulairement par deux butées 28 et 29.

On note également que la pièce de liaison 25 présente une patte 30 qui s'étend radialement sur laquelle est connectée l'extrémité arrière de bielle de connexion 23. Le dossier 2, quand à lui, est doté d'un pion 32 qui est en contact de la piste d'appui 26.

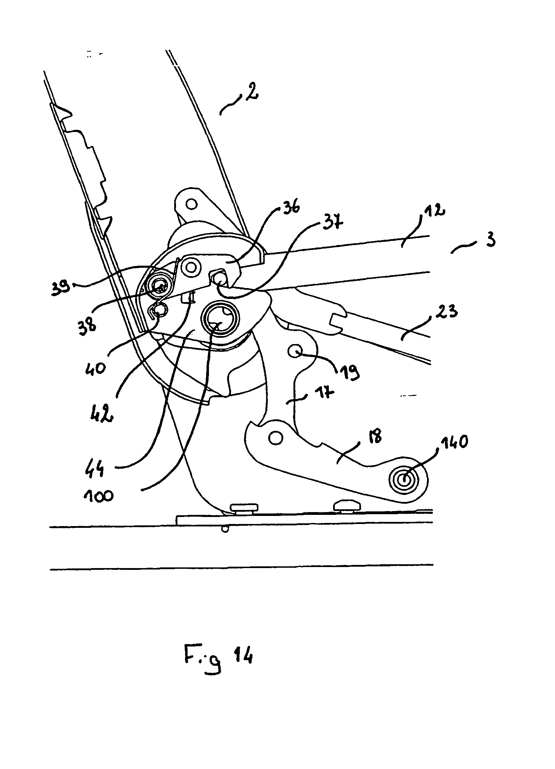

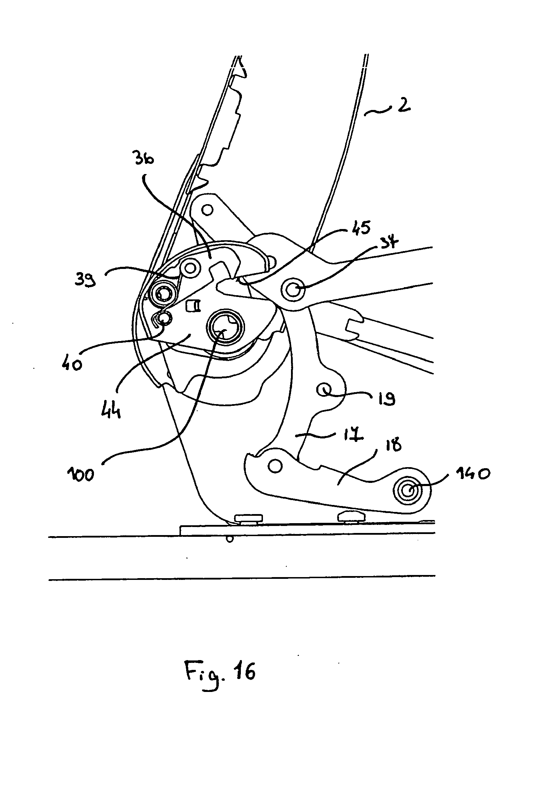

Le siège 1 est, en outre, doté d'organes de verrouillage qui permettent de le maintenir dans sa configuration déployée. Ces organes de verrouillage sont plus particulièrement représentés aux Figures 14 à 16. Comme cela apparaît sur ces figures, les organes de verrouillage peuvent être constitués d'un crochet 36 qui, en position déployée du siège, est engagé sur un doigt de verrouillage 37 qui lui-même est solidaire de l'assise 3. De manière concrète, le doigt de verrouillage 37 est supporté par l'extrémité arrière d'un brancard latéral 12. Il est précisé que le crochet 36 est mobile en rotation autour d'un axe 38 et est maintenu dans sa position de verrouillage par un ressort en épingle 39 dont l'une des branches est en appui contre un pion fixe 40 et dont l'autre branche est en appui contre ledit crochet 36.

Dans l'exemple montré à la figure 14, le crochet 36 est donc sollicité en rotation dans le sens horaire. On note la présence d'une butée 42 qui vient arrêter la rotation du crochet 36.

Le crochet 36 peut être commandé par un élément de commande, qui peut être une tringle ou une sangle, qui n'est pas représenté sur le dessin. Le crochet 36 peut également être actionné par la rotation dossier 2.

On note que le crochet 36 est embarqué sur une platine 44 qui présente une ouverture en V 45 dans laquelle peut être engagé le doigt de verrouillage 37 fixé sur l'assise 3. La platine 44 est supportée par un flasque latéral 5. Ainsi les organes de verrouillage réalisent un verrouillage de l'assise 3 par rapport au châssis 4.

Conformément aux exigences habituelles en matière de siège escamotable, le siège 1 selon l'invention peut présenter plusieurs positions qui correspondent à différents modes d'utilisation.

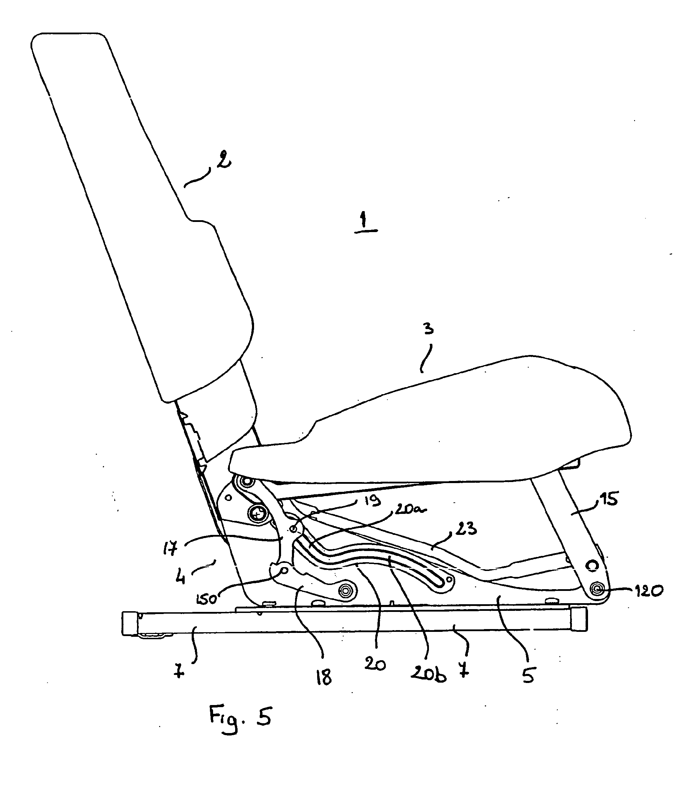

La figure 5 montre, par exemple, le siège 1 dans sa position dite nominale c'est-à-dire sa position d'utilisation classique pour recevoir un passager. Dans cette position, le dossier 2 forme un angle légèrement obtus par rapport à l'assise 3. Par un angle légèrement obtus, il faut entendre que le dossier est incliné vers l'arrière d'une quinzaine de degrés par rapport à la verticale. En d'autres termes, le dossier 2 et l'assise 3 forment un angle de l'ordre de 100° à 110°.

Selon les besoins du passager, le dossier 2 peut également être placé dans une position dite confort arrière dans laquelle le dossier 2 est plus fortement incliné vers l'arrière.

Dans le cas où le siège est positionné en avant d'une autre rangée de sièges, il peut également être prévu de placer le siège en position dite accès place arrière (APA) dans laquelle le dossier 2 forme alors un angle légèrement aigu par rapport à l'assise 3. Par angle légèrement aigu par rapport à l'assise, il faut entendre que le dossier est incliné d'une dizaine de degrés vers l'avant par rapport à la verticale ce qui permet d'accéder facilement à l'espace situé en arrière du siège. En d'autres termes, le dossier 2 et l'assise 3 forment un angle de l'ordre de 75° à 80°.

Il est important de noter que, pour le siège selon l'invention, la rotation du dossier 3 sur la plage angulaire qui vient d'être décrite, c'est-à-dire la plage angulaire allant de sa position extrême arrière constituée par la position dite de confort arrière à sa position extrême avant dite position APA, s'est faite indépendamment de tout mouvement de l'assise 3.

Ceci est rendu possible par les moyens de liaison de la bielle de connexion 23 qui sont spécifiques à l'invention.

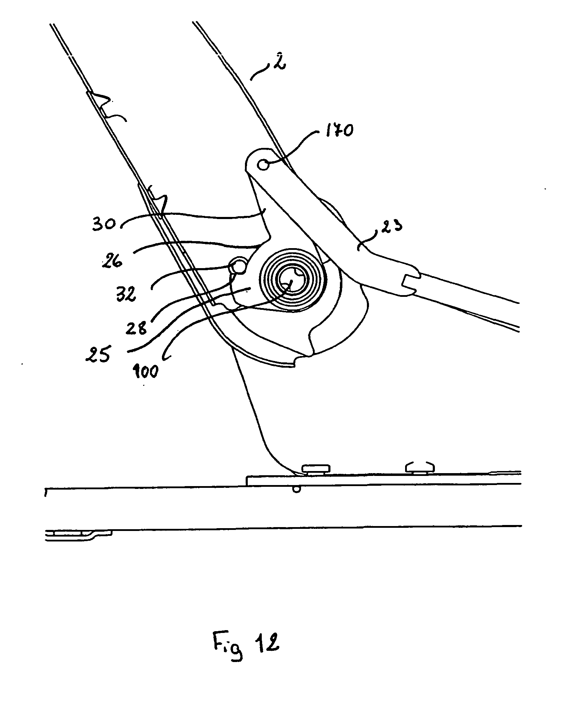

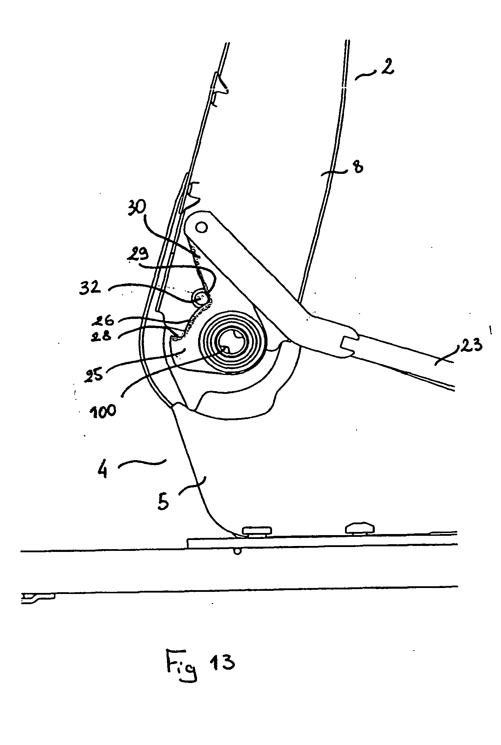

En effet, on a vu que la pièce de liaison 25 qui assure la jonction avec la bielle de connexion 23 présente une piste d'appui 26 bornée par deux butées 28 et 29. Ces deux butées correspondent aux positions respectives, en position confort arrière (voir Figure 12), le pion 32 est en appui contre la butée 28 tandis qu'en position APA du siège le pion 32 est en appui contre la butée 29 (voir Figure 13).

Bien entendu, le dossier est équipé d'un système de verrouillage qui peut être constitué de manière classique de deux secteurs dentés qui peuvent être écartés l'un de l'autre pour permettre la rotation du dossier et qui s'engrènent l'un dans l'autre lorsque l'utilisateur a positionné le dossier dans la position qu'il souhaite.

On peut retenir donc que, sur le secteur angulaire allant de la position confort arrière à la position APA, le dossier 2 peut être mis en rotation tout en conservant l'assise 3 immobile. Il est également précisé que sur cette plage angulaire, le crochet 36 est engagé sur le doigt de verrouillage 37. De ce fait, l'assise 3 et, donc, la bielle de connexion 23 sont maintenues dans une position fixe ; la pièce de liaison 25 est également fixe ce qui permet aux butées 28 et 29 de jouer pleinement leur rôle d'arrêt en rotation du dossier 3.

Cela est tout à fait utile dans le cas où le siège 1 est placé en position APA puisque, dans cette position, il n'est pas souhaitable que l'assise 3 avance vers l'avant; en effet, celle-ci pourrait alors venir en collision avec un siège placé en avant.

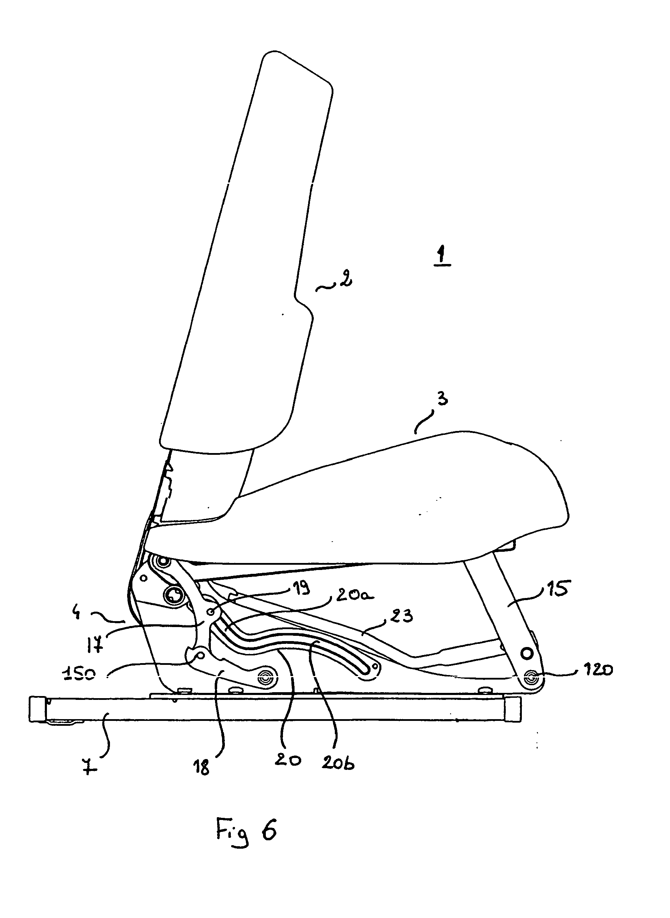

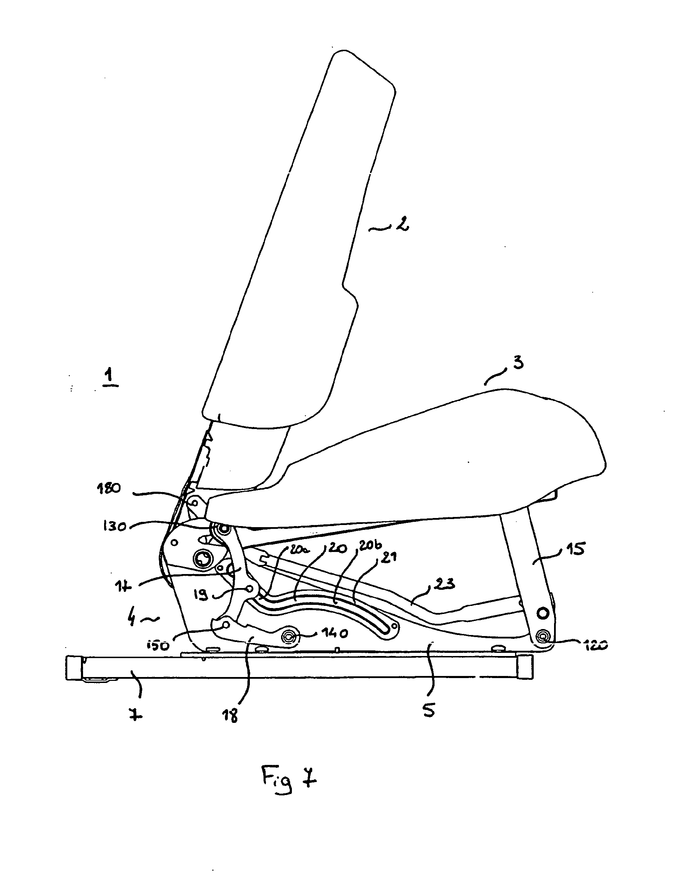

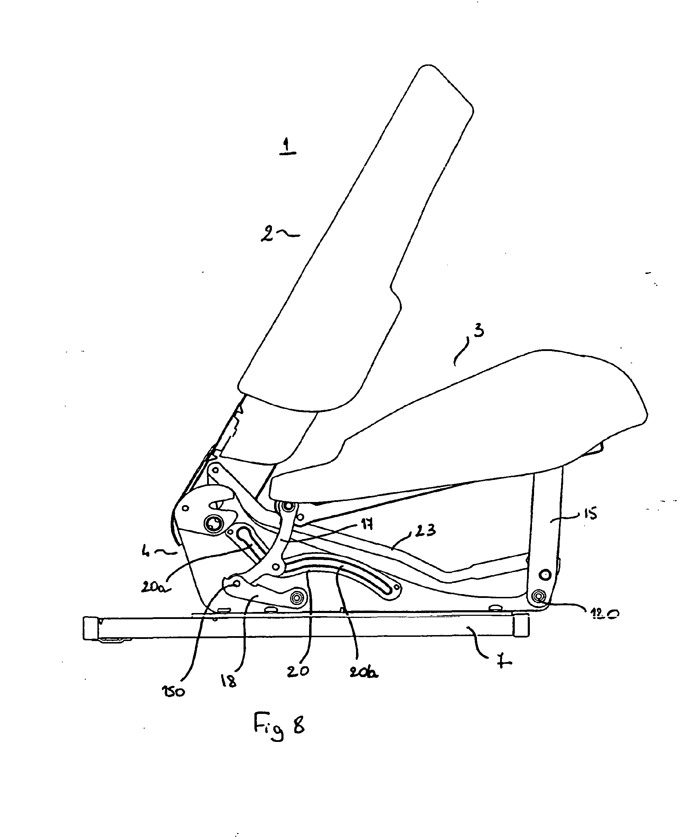

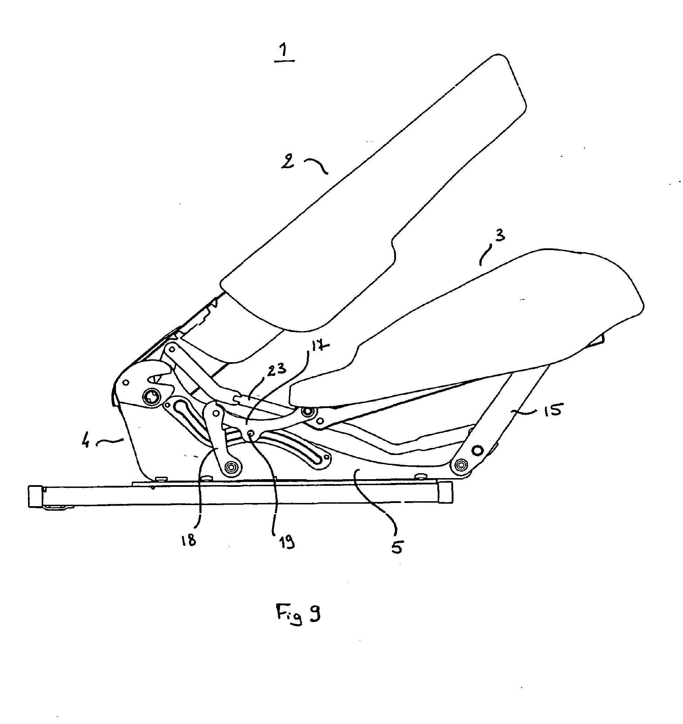

L'opération d'escamotage du siège, qui est représentée par ses phases successives aux figures 5 à 10, se déroule de la manière suivante.

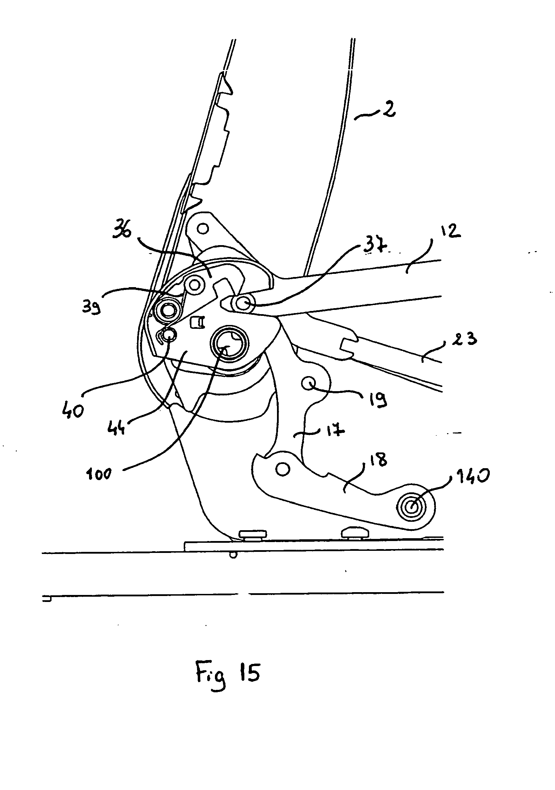

A partir du siège qui est dans sa position APA (voir Figure 5), un opérateur déverrouille le crochet 36 de verrouillage, ce qui a pour effet de désolidariser l'assise 3 du châssis 4. Le déverrouillage est représenté à la Figure 15. Le déverrouillage du dossier peut également être couplé avec la rotation du dossier 2.

L'utilisateur exerce alors une action de poussée sur le dossier 2. Cette action peut être assistée par un ressort placé au niveau de la liaison pivot 110 ou par un vérin ou, éventuellement par une motorisation électrique.

Le mouvement de rotation du dossier 2 par rapport au châssis 4 autour de la liaison pivot 100 est transmis à l'assise 3 par la biellette de liaison qui est fixée à l'une des bielles avant 15 de l'assise.

Par conséquent, l'une des bielles avant 15 de l'assise est mise en rotation et l'assise 3 est, dans son ensemble, tractée vers l'avant.

Au niveau de l'arrière de l'assise, la première biellette 17 qui est engagée dans la lumière 20 suit la première portion 20a de cette lumière et descend donc de manière oblique vers le plancher. Cela se traduit par une descente relativement abrupte de la partie arrière de l'assise 3 en direction du plancher.

Cet affaissement de la partie arrière de l'assise 3 permet d'éviter une collision et, éventuellement, un coincement des garnitures respectives du dossier et de l'assise.

En d'autres termes, l'affaissement rapide de la partie arrière de l'assise 3 permet au dossier de poursuivre sa rotation en direction du plancher. Ainsi, le dossier 2 fait l'objet d'une rotation simple par rapport à la liaison pivot 100 tandis que l'assise 3 fait l'objet d'un mouvement complexe qui permet d'éviter une collision entre l'assise 3 et le dossier 2 au début de l'escamotage du siège 1.

Au fur et à mesure de la rotation du dossier par rapport à la liaison pivot 100, la bielle avant 15 de l'assise 3 est entraînée en rotation vers l'avant autour de la liaison pivot 120 ; à un point de l'avancée de l'assise 3 vers l'avant, le doigt de guidage lié à la première biellette 17 entre dans la seconde portion 20b de la lumière qui est sensiblement horizontale de telle sorte que les deux biellettes 17 et 18 qui forment les moyens de liaison arrière de l'assise 2 peuvent se mettre alors dans le prolongement l'une de l'autre ; les deux biellettes 17 et 18 offrent alors un déploiement maximal permettant à l'assise 3 d'être positionnée dans sa position la plus avancée. Il est précisé, cependant, que cette avancée de l'assise est limitée par la longueur des deux bielles avant 15 formant pied avant.

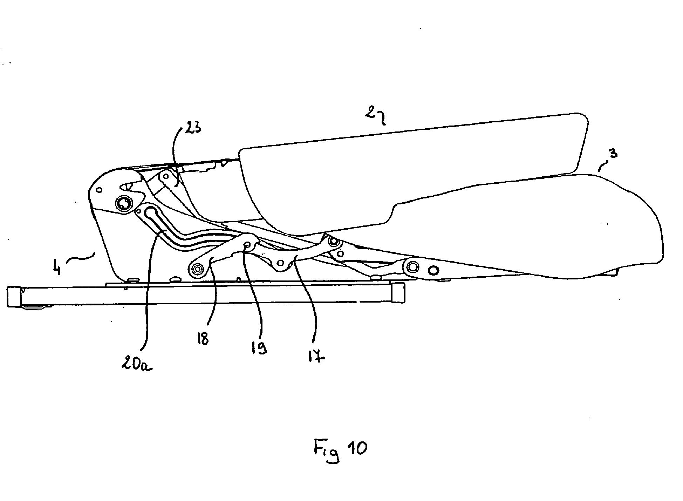

On peut apprécier sur la Figure 10, la grande compacité du siège dans sa configuration escamotée. En effet, dans cette position l'assise 3 est décalée vers l'avant ce qui permet au dossier d'être rabattu vers le plancher en occupant une cote verticale minimale.

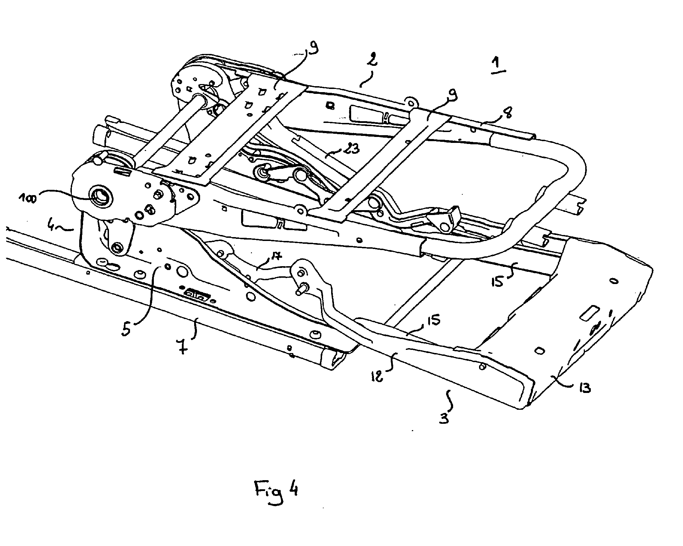

Le déploiement du siège depuis sa position escamotée telle que représentée à la Figure 4 ou à la Figure 10, se fait de manière inverse. Un utilisateur exerce une traction sur le dossier 2 pour le faire pivoter vers sa position nominale ; la rotation du dossier 2 entraîne, par la bielle de connexion 23, le relèvement de l'assise 3 jusqu'à sa position dans laquelle elle est adjacente au dossier 2.

Le siège selon l'invention peut donc accepter des éléments de garniture d'épaisseur importante tout en conservant sa capacité à être escamoté.

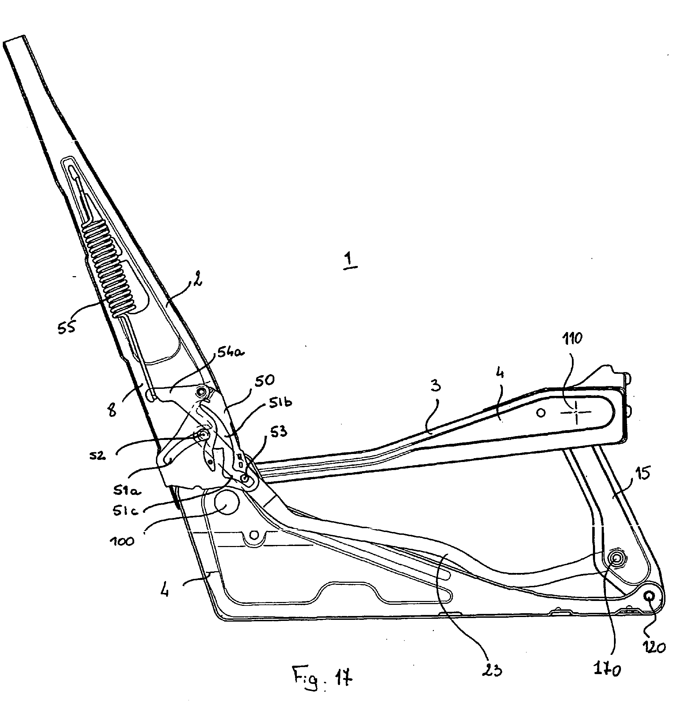

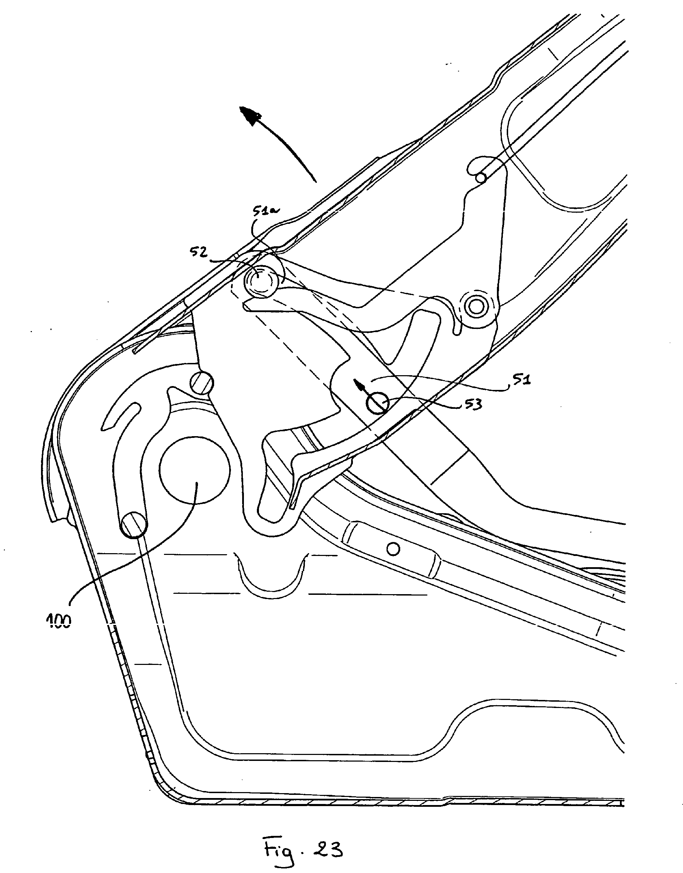

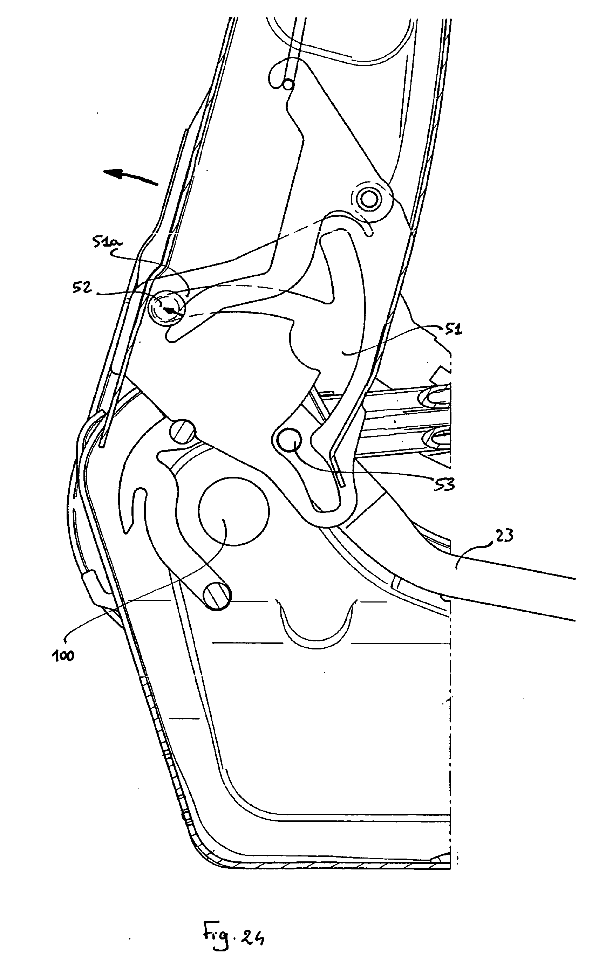

La deuxième forme de réalisation décrite en référence aux figures 17 à 24 reprend le même principe cinématique que celui de la première forme de réalisation c'est-à-dire un principe cinématique par lequel le dossier 2 d'un siège peut être incliné entre une position confort arrière et une position APA sans modification de la position de l'assise 3 et peut être incliné entre la position APA et une position escamotée avec entrainement de l'assise vers sa position d'escamotage.

La deuxième forme de réalisation du siège selon l'invention se distingue essentiellement de la forme de réalisation des figures 1 à 16 par une gestion différente de la liaison entre la bielle de connexion 23 et le dossier 2.

Il est précisé que les figures 17 à 24 représentent principalement les moyens de liaison de la bielle de connexion 23 sur le dossier 2. Pour la bonne compréhension de ces moyens de liaison et de leur fonctionnement, les organes de verrouillage de l'assise sur le dossier et le pied arrière de l'assise qui sont similaires à ceux du siège illustré aux figures 1 à 16 ne sont pas représentés.

Comme on peut le voir sur la figure 17, il est prévu de doter le siège d'un flasque d'engrènement 50. Le flasque d'engrènement 50 est positionné sur la face intérieure d'un montant 8 du dossier 2.

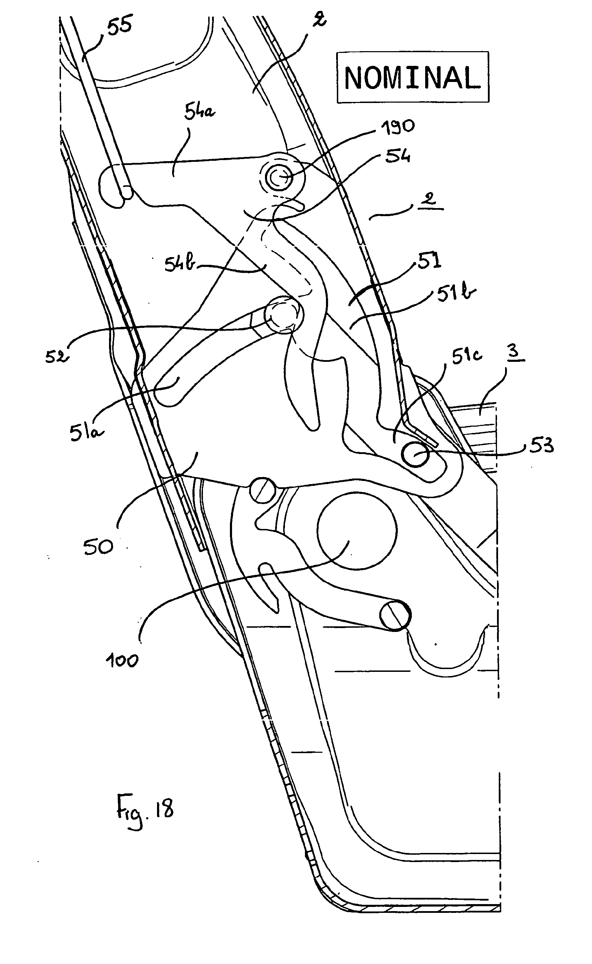

Le flasque d'engrènement 50 est relié de manière fixe sur le dossier 2 par exemple par soudage. La figure 18 permet de voir le flasque d'engrènement 50 à une plus grande échelle. Le flasque d'engrènement 50 présente une lumière 51 dont la géométrie est complexe et sur laquelle repose en partie le fonctionnement du siège.

La lumière présente trois segments à savoir :
- un segment primaire 51 a; le segment primaire 51a est configuré en arc de cercle centré sur la liaison pivot 100 du dossier 2 sur le châssis 4,
- un segment intermédiaire 51b ; le segment intermédiaire 51 b présente une forme arquée et forme sensiblement un T avec le segment primaire 51 a
- un segment secondaire 51c; le segment secondaire 51c est configuré en arc de cercle centrée sur la liaison pivot 100 avec un rayon inférieur à celui du segment primaire 51 a.

Une spécificité du siège selon l'invention tient au fait que deux doigts 52 et 53 sont engagés dans la lumière 51. Ces deux doigts 52 et 53 espacés l'un de l'autre sont supportés par la bielle de connexion 23, le doigt distal 52 étant positionné à l'extrémité de la bielle de connexion 23 et le doigt proximal 53 étant positionné à distance du doigt distal 52.

A son extrémité avant, la bielle de connexion 23 est liée au pied avant 15 par une liaison pivot 170, tandis qu'à son extrémité arrière, la bielle de connexion 23 est liée au dossier 2 par les deux doigts 52 et 53 qui sont engagés dans la lumière 51.

On note également la présence d'un bras 54 qui possède deux branches 54a et 54b sensiblement perpendiculaires. Le bras est monté en pivot sur le dossier 2 par une liaison 190. Le bras 54a possède une encoche qui sert à fixer un ressort 55 tandis que l'autre bras présente une concavité qui sert d'appui au doigt proximal 52. Le ressort 55 est un ressort hélicoïdal qui est fixé à un point du dossier et qui exerce une traction sur le bras 54 en vue de la faire pivoter vers l'arrière du siège.

Lorsque le siège est dans sa position nominale telle qu'illustrée à la figure 18, l'assise 3 est verrouillée sur le dossier 2 par des organes de verrouillage par exemple comme ceux que l'on peut voir sur la figure 14.

La bielle de connexion 23 est guidée par le doigt distal 52 qui est en engagé dans le segment primaire 51a de la lumière 51; le doigt proximal 52 est pour sa part engagé dans le segment secondaire 51 c de la lumière 51.

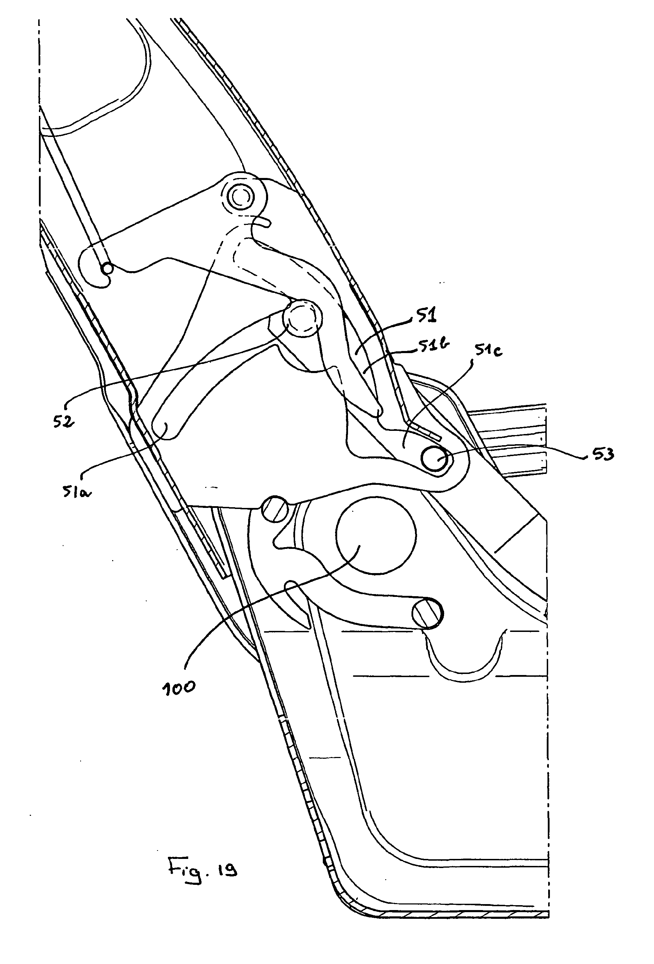

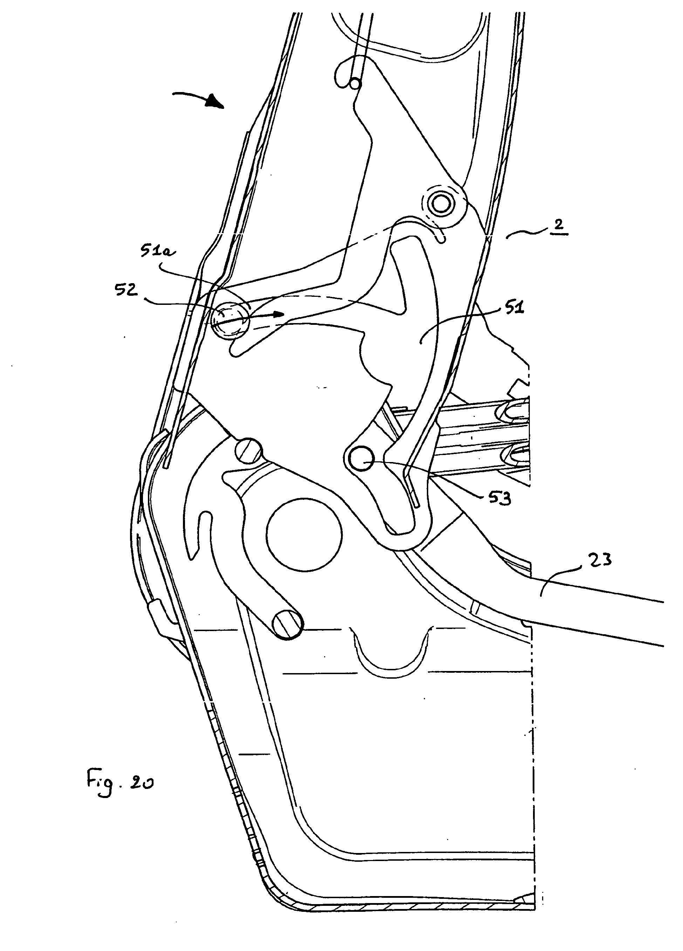

A partir de la position nominale, le dossier 2 peut osciller entre:
(i) une position confort (figure 19) dans laquelle le dossier 2 est incliné vers l'arrière, et
(ii) une position APA dans laquelle le dossier 2 est légèrement incliné vers l'avant (figure 20).

Le point important à retenir de la rotation du dossier 2 entre la position confort et la position APA est qu'elle se produit sans interaction sur la position de l'assise 3.

En effet, entre la position nominale (figure 18) et la position confort (figure 19), le doigt distal 52 glisse dans le segment primaire 51a de la lumière 51 tandis que le doigt proximal 53 glisse dans le segment secondaire 51 c de la lumière 51.

De façon similaire, entre la position nominale (figure 18) et la position APA (figure 20), le doigt distal 52 glisse dans le segment primaire 51a de la lumière 51 jusqu'à venir en butée contre l'extrémité arrière de celle-ci tandis que le doigt proximal 53 vient se positionner au niveau de l'extrémité arrière du segment secondaire 51c de la lumière 51.

On voit donc que, sur le secteur angulaire compris entre la position confort et la position APA, le dossier 2 peut osciller sans interaction sur l'assise 3.

En revanche, lorsque le dossier dépasse la position APA en direction de l'assise 3, la bielle de connexion 23 entre en action.

Lorsqu'un utilisateur souhaite procéder à l'escamotage du siège, il peut agir sur une commande (non représentée) de type sangle ou tringle qui déverrouille les organes de verrouillage de l'assise 2 sur le dossier 3.

Dans le cas où le siège est équipé d'organes de verrouillage tels que ceux montrés aux figures 14 à 16, le crochet 36 se dégage du doigt de déverrouillage 37 ce qui rend l'assise 3 libre par rapport au dossier 2.

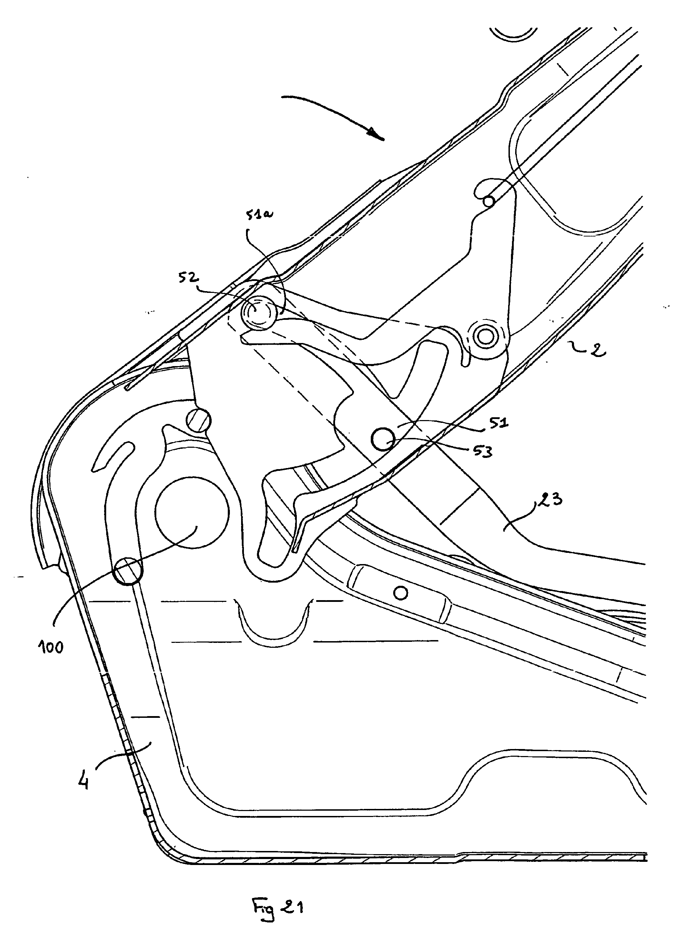

La figure 21 montre la manière avec laquelle s'opère l'entrainement de l'assise 3 par la rotation du dossier 2.

En partant de la position APA (figure 20), le doigt distal 52 est en appui contre le fond du segment primaire 51a de la lumière 51, la poursuite de la rotation du dossier 2 a pour effet de pousser la bielle de connexion 23 vers l'avant du siège. Lors de ce mouvement vers l'avant de la bielle de connexion 23, le pied avant 15 du siège est entrainé en rotation vers l'avant puisque l'extrémité avant de la bielle de connexion 23 est liée au pied avant 15 par la liaison pivot 170.

En phase d'escamotage, le pilotage de la bielle de connexion 23 se fait donc par le doigt distal 52 qui est en appui contre l'extrémité du segment primaire 51a de la lumière et qui, donc, transmet le mouvement de rotation du dossier 2 à la bielle de connexion 23 et à l'assise 3. La figure 21 montre le siège en cours d'escamotage avec le pilotage de la bielle de connexion 23 par le doigt distal 52.

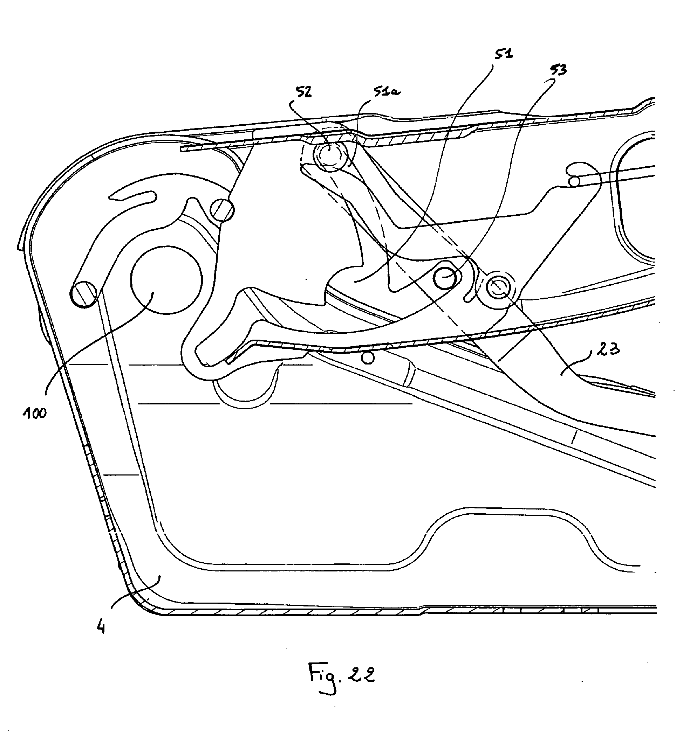

La phase d'escamotage se poursuit avec le dossier 2 qui vient se placer à l'horizontal. Dans cette position qui est illustrée à la figure 22, la bielle de connexion 23 est dans sa position la plus avancée. Le doigt distal 52 est en appui contre le fond du segment primaire 51a de la lumière 51 tandis que le doigt proximal 53 se trouve à l'extrémité de la section intermédiaire 51 b de la lumière 51.

En position escamotée, on trouve les avantages déjà décrits en relation avec le siège dans sa forme de réalisation des figures 1 à 16, c'est-à-dire une assise 3 déportée vers l'avant de manière à limiter la superposition des garnitures du dossier sur l'assise.

Le déploiement du siège depuis la position escamotée représentée à la figure 22 s'effectue en exerçant une traction sur le dossier pour que le dossier pivote par rapport à la liaison pivot 100.

Au cours de la rotation du dossier 2, le doigt proximal 52 est en appui contre le segment intermédiaire 51 b de la lumière 51 et, de ce fait, exerce une traction sur la bielle de connexion 23 qui contribue à ramener l'assise 3 vers sa position déployée. Le pilotage du déploiement de l'assise 3 depuis sa position escamotée se fait donc par le segment intermédiaire 51 b de la lumière 51 qui exerce une poussée sur le doigt proximal 52 de la bielle de connexion 23.

Lorsque le dossier 3 passe par la position APA, le doigt proximal 52 se trouve alors devant le segment secondaire 51 c de la lumière et, par construction, n'exerce plus de fonction de traction. C'est là que bras 54 entre en action pour accompagner la fin du déploiement de l'assise 3 et pour assurer le bon accostage de l'assise 3 dans les organes de verrouillage.

En effet, dans cette dernière phase du déploiement du siège, le bras 54 qui est sollicité en permanence par le ressort 55 exerce une poussée sur le doigt distal 52. L'action du ressort 55 permet de maintenir le doigt distal 52 en fond du segment primaire 51a de la lumière 51 ; cela permet d'éviter que la bielle de connexion 23 glisse vers l'avant et de ce fait cesse d'exercer son action de traction sur le pied avant de l'assise.

L'action du bras 54 est importante dans cette phase de déploiement du siège car cela permet de piloter l'accostage de l'assise 3 dans les organes de verrouillage.

On comprend donc que les moyens de liaison de la bielle de connexion 23 assurent le pilotage de l'assise 2 aussi bien durant l'escamotage et que durant de déploiement du siège. Il est à noter que le pilotage du déploiement de l'assise 2 permet d'éviter l'emploi de ressorts de rappel qui généralement sont utilisés pour assister le retour de l'assise vers la position déployée et qui ont généralement un effet brutal de type « piège à rat » qui n'est pas souhaitable.

Bien entendu, l'invention n'est pas limitée aux formes de réalisation décrites ci-dessus à titre d'exemples non limitatifs. Ainsi, le siège peut comporter des moyens de connexion de l'assise sur le dossier sur l'un ou sur ses deux cotés. Les moyens de verrouillage peuvent également être présents en un ou en deux exemplaires.

## Revendications

1. Siège escamotable notamment pour un véhicule automobile comprenant :
- un châssis (4) destiné à être relié à un plancher du véhicule, le châssis (4) présentant une partie avant et une partie arrière,
- une assise (3) ayant un pied avant (15) relié a la partie avant du châssis (4) et des moyens formant pied arrière reliés à la partie arrière du châssis, l'assise (3) étant mobile entre une position d'utilisation dans laquelle l'assise est maintenue sensiblement parallèle au plancher et en hauteur par rapport à celui-ci et une position d'escamotage dans laquelle l'assise est sensiblement en appui sur le plancher et en avant du châssis (4),
- un dossier (2) relié par une liaison pivot (100) à l'extrémité arrière du châssis (4), le dossier étant mobile angulairement par rapport au châssis (4) entre une position confort arrière et une position d'escamotage dans laquelle le dossier (2) est parallèle au plancher, le dossier pouvant occuper entre ces positions extrêmes une position nominale dans laquelle le dossier forme un angle légèrement obtus avec l'assise et une position d'accès place arrière APA dans laquelle le dossier (2) forme un angle légèrement aigu avec l'assise (3), **caractérisé en ce que** :
- une bielle de connexion (23) est pourvue dont l'une des extrémités est reliée à l'assise (3) et dont l'autre extrémité est reliée au dossier (2), la fixation de la bielle de connexion (23) avec le dossier (2) étant réalisée par des moyens de liaison (50 à 54 ; 25) permettant, sur la course angulaire du dossier comprise entre la position de confort arrière et la position APA, un découplage du dossier par rapport à l'assise (3) et permettant de lier le déplacement du dossier (2) et le déglacement de l'assise lors de leurs déplacements respectifs vers leur position d'escamotage ; et **en ce que** les moyens de liaison formant pied arrière de l'assise (3) comprennent une première biellette (17) et une seconde biellette (18) reliées entre elles par une liaison pivot (150), la première biellette (17) étant connectée à l'assise (3) et la seconde biellette (18) étant connectée au châssis (4), la première biellette (17) étant associée à des moyens de guidage permettant de décomposer le mouvement de l'assise (3) lors de l'escamotage du siège (1) en un mouvement primaire dans lequel la partie arrière de l'assise est tractée en direction du plancher et en un mouvement secondaire dans lequel la partie arrière de l'assise est tractée vers l'avant du châssis (4).

2. Siège escamotable selon la revendication 1, **caractérisé en ce que** les moyens de guidage comprennent un axe (38) lié à la première biellette (17), l'axe (38) étant engagé dans une lumière (20) curviligne qui présente une première portion (20a) orientée de manière oblique et descendante par rapport au plancher, prolongée par une deuxième portion (20b) courbe dont le concavité est dirigée vers le plancher.

3. Siège escamotable selon l'une des revendications 1 à 2, **caractérisé en ce que** les moyens de liaison de la bielle de connexion (23) et du dossier (2) comprennent un flasque d'engrènement (50) possédant une lumière (51) dans lequel sont engagés un doigt distal (52) positionné à l'extrémité de la bielle de connexion (23) et un doigt proximal (53) positionné sur la bielle de connexion (23) à distance du doigt distal (52), le doigt distal (52) transmettant la rotation du dossier (2) entre la position APA et la position d'escamotage à la bielle de connexion (23) et le doigt proximal (53) transmettant la rotation du dossier (2) entre la position d'escamotage et la position APA à la bielle de connexion (23).

4. Siège escamotable selon la revendication 3, **caractérisé en ce que** la lumière (51) du flasque d'engrènement (50) présente
- un segment primaire (51 a) en arc de cercle centré sur la liaison pivot (100) du dossier (2) sur le châssis (4),
- un segment intermédiaire de forme arquée et formant sensiblement un T avec le segment primaire (51a),
- un segment secondaire en arc de cercle centré sur la liaison pivot (100) avec un rayon inférieur à celui du segment primaire (51a).

5. Siège escamotable selon la revendication 3 ou la revendication 4, **caractérisé en ce que** les moyens de liaison comprennent de plus un bras (54) fixé sur le dossier par une liaison pivot (190) comprenant une première branche (54a) sur laquelle est fixé un ressort (55) retenu sur le dossier (2) et une deuxième branche (54b) conçue pour venir en appui sur le doigt distal (52).

6. Siège escamotable selon l'une des revendications 1 à 2, **caractérisé en ce que** les moyens de liaison de la bielle de connexion (23) et du dossier (2) comprennent une pièce de liaison (25) coaxial avec l'axe de liaison du dossier (2) sur le châssis (4), ladite pièce de liaison présentant une piste d'appui (26) en arc de cercle centrée sur l'axe de rotation, l'ouverture angulaire de la piste d'appui (26) étant délimitée par deux butées (28, 29) et un doigt fixé sur le dossier (2) qui glisse sur la piste d'appui (26).

7. Siège escamotable selon la revendication 6, **caractérisé en ce que** la pièce de liaison (25) présente une patte (30) qui s'étend radialement formant un bras de levier à laquelle est reliée la bielle de connexion (23).

8. Siège escamotable selon la revendication 7, **caractérisé en ce que** la pièce de liaison (25) est libre en rotation par rapport à l'axe de rotation du dossier (2) par rapport au châssis (4).

9. Siège escamotable selon l'une des revendications 1 à 8, **caractérisé en ce que** le siège (1) présente des moyens de verrouillage en position déployée.

10. Siège escamotable selon la revendication 9, **caractérisé en ce qu'**un crochet (36) est disposé sur le châssis (4), ledit crochet (36) étant pivotant entre une position de verrouillage dans laquelle le crochet (36) est engagé sur un pion fixé sur l'assise (3) et une position de déverrouillage dans laquelle le crochet (36), par pivotement, est dégagé du pion.

11. Siège escamotable selon l'une des revendications 1 à 10, **caractérisé en ce que** le siège (1) présente deux glissières parallèles (6), chacune constituée d'un profilé (7) disposé dans le plancher du véhicule dans lequel est engagé un profilé complémentaire lié au châssis (4).

## Patentansprüche

1. Klappsitz, vor allem für ein Kraftfahrzeug, folgendes umfassend:
- einen Rahmen (4), der dazu bestimmt ist, mit einem Boden des Fahrzeugs verbunden zu werden, wobei der Rahmen (4) einen vorderen Teil und einen hinteren Teil aufweist,
- eine Sitzfläche (3), die einen vorderen Fuß (15) aufweist, der mit dem vorderen Teil des Rahmens (4) verbunden ist, und Mittel, die den hinteren Fuß bilden, und mit dem hinteren Teil des Rahmens verbunden sind, wobei die Sitzfläche (3) zwischen einer Nutzposition, in der die Sitzfläche in etwa parallel zum Boden und auf einer Höhe im Verhältnis zu diesem gehalten wird, und einer Klappposition bewegt werden kann, in der die Sitzfläche in etwa am Boden und vorne am Rahmen (4) anliegt,
- eine Rückenlehne (2), die durch ein Drehgelenk (100) mit dem hinteren Ende des Rahmens (4) verbunden ist, wobei die Rückenlehne winklig im Verhältnis zum Rahmen (4) zwischen einer hinteren Komfortposition und einer Klappposition bewegt werden kann, in der die Rückenlehne (2) parallel zum Boden verläuft, wobei die Rückenlehne zwischen diesen extremen Positionen eine nominale Position einnehmen kann, in der die Rückenlehne mit der Sitzfläche einen leicht stumpfen Winkel bildet, und eine Position für den Zugang zu den Rücksitzen APA, in der die Rückenlehne (2) mit der Sitzfläche (3) einen leicht spitzen Winkel bildet, **dadurch gekennzeichnet, dass**:
- ein Verbindungsgestänge (23) vorhanden ist, dessen erstes Ende mit der Sitzfläche (3) verbunden ist, und dessen anderes Ende mit der Rückenlehne (2) verbunden ist, wobei die Befestigung des Verbindungsgestänges (23) mit der Rückenlehne (2) durch Verbindungsmittel (50 bis 54; 25) erfolgt, die bei der Winkelbewegung der Rückenlehne zwischen der hinteren Komfortposition und der APA Position ein Auskoppeln der Rückenlehne im Verhältnis zur Sitzfläche (3) ermöglichen, und die es ermöglichen, die Bewegung der Rückenlehne (2) und die Bewegung der Sitzfläche bei deren jeweiligen Bewegungen in ihre Klappposition zu verknüpfen; und dadurch, dass die Verbindungsmittel, die den hinteren Fuß der Sitzfläche (3) bilden, eine erste Koppelstange (17) und eine zweite Koppelstange (18) umfassen, die durch ein Drehgelenk (150) miteinander verbunden sind, wobei die erste Koppelstange (17) mit der Sitzfläche (3) verbunden ist, und die zweite Koppelstange (18) mit dem Rahmen (4) verbunden ist, wobei die erste Koppelstange (17) Führungsmitteln zugeordnet ist, die es ermöglichen, die Bewegung der Sitzfläche (3) beim Einklappen des Sitzes (1) in eine Primärbewegung, bei der der hintere Teil der Sitzfläche in Richtung des Bodens gezogen wird, und in eine Sekundärbewegung zu zergliedern, bei der der hintere Teil der Sitzfläche zum Vorderteil des Rahmens (4) gezogen wird.

2. Klappsitz nach Anspruch 1, **dadurch gekennzeichnet, dass** die Führungsmittel eine Achse (38) umfassen, die mit der ersten Koppelstange (17) verbunden ist, wobei die Achse (38) durch ein krummliniges Langsloch (20) läuft, das einen ersten Abschnitt (20a) aufweist, der im Verhältnis zum Boden schräg abfallend ausgerichtet ist und sich in einem zweiten gekrümmten Abschnitt (20b) fortsetzt, dessen Konkavität zum Boden hin gerichtet ist.

3. Klappsitz nach einem der Ansprüche 1 bis 2, **dadurch gekennzeichnet, dass** die Verbindungsmittel des Verbindungsgestänges (23) und der Rückenlehne (2) einen Verzahnungsflansch (50) umfassen, der ein Langloch (51) besitzt, in dem ein distaler Stift (52), der am Ende des Verbindungsgestänges (23) positioniert ist, und ein proximaler Stift (53), der in einem Abstand vom distalen Stift (52) auf dem Verbindungsgestänge (23) positioniert ist, laufen, wobei der distale Stift (52) die Drehbewegung der Rückenlehne (2) zwischen der APA Position und der Klappposition auf das Verbindungsgestänge (23) überträgt, und der proximale Stift (53) die Drehbewegung der Rückenlehne (2) zwischen der Klappposition und der APA Position auf das Verbindungsgestänge (23) überträgt.

4. Klappsitz nach Anspruch 3, **dadurch gekennzeichnet, dass** das Langloch (51) des Verzahnungsflansches (50) folgendes aufweist:
- ein Primärsegment (51 a) in Kreisbogenform, das auf dem Drehgelenk (100) der Rückenlehne (2) auf dem Rahmen (4) zentriert ist,
- ein Zwischensegment in Bogenform und das mit dem Primärsegment (51 a) in etwa ein T bildet,
- ein Sekundärsegment in Kreisbogenform, das auf dem Drehgelenk (100) mit einem kleineren Radius als jenem des Primärsegments (51a) zentriert ist.

5. Klappsitz nach Anspruch 3 oder Anspruch 4, **dadurch gekennzeichnet, dass** die Verbindungsmittel zusätzlich einen Arm (54) umfassen, der durch ein Drehgelenk (190) an der Rückenlehne befestigt ist, einen ersten Schenkel (54) umfassend, auf dem eine Feder (55) befestigt ist, die auf der Rückenlehne (2) zurückgehalten wird, und einen zweiten Schenkel (54b) umfassend, der konzipiert ist, um sich an den distalen Stift (52) anzulegen.

6. Klappsitz nach einem der Ansprüche 1 bis 2, **dadurch gekennzeichnet, dass** die Verbindungsmittel des Verbindungsgestänges (23) und der Rückenlehne (2) ein mit der Verbindungsachse der Rückenlehne (2) auf dem Rahmen (4) koaxiales Verbindungsstück (25) umfassen, wobei das besagte Verbindungsstück eine Laufbahn (26) in Kreisbogenform aufweist, die auf der Drehachse zentriert ist, wobei die Winkelöffnung der Laufbahn (26) durch zwei Anschläge (28, 29) und einen Stift, der auf der Rückenlehne (2) befestigt ist, und über die Laufbahn (26) gleitet, eingeschränkt wird.

7. Klappsitz nach Anspruch 6, **dadurch gekennzeichnet, dass** das Verbindungsstück (25) eine Lasche (30) aufweist, die sich radial erstreckt und einen Hebelarm bildet, mit dem das Verbindungsgestänge (23) verbunden ist.

8. Klappsitz nach Anspruch 7, **dadurch gekennzeichnet, dass** das Verbindungsstück (25) im Verhältnis zur Drehachse der Rückenlehne (2) im Verhältnis zum Rahmen (4) frei verdreht werden kann.

9. Klappsitz nach einem der Ansprüche 1 bis 8, **dadurch gekennzeichnet, dass** der Sitz (1) in der ausgefahrenen Position Verriegelungsmittel aufweist.

10. Klappsitz nach Anspruch 9, **dadurch gekennzeichnet, dass** ein Haken (36) auf dem Rahmen (4) angeordnet ist, wobei der besagte Haken (36) zwischen einer Verriegelungsposition, in der der Haken (36) in einen Zapfen eingeführt ist, der auf der Sitzfläche (3) befestigt ist, und einer Löseposition schwenkbar ist, in der der Haken (36) mittels Schwenkbewegung aus dem Zapfen gelöst wird.

11. Klappsitz nach einem der Ansprüche 1 bis 10, **dadurch gekennzeichnet, dass** der Sitz (1) zwei parallel verlaufende Gleitschienen (6) aufweist, die jeweils aus einem Profil (7) gebildet werden, das am Boden des Fahrzeugs angeordnet ist, in dem ein ergänzendes Profil in Verbindung mit dem Rahmen (4) angebracht wird.

## Claims

1. A retractable seat in particular for a motor vehicle, comprising:
- a chassis (4) intended to be connected to a floor pan of the vehicle, the chassis (4) having a front part and a rear part,
- a base (3) having a front leg (15) connected to the front part of the chassis (4) and means forming rear leg connected to the rear part of the chassis, the base (3) being movable between a use position in which the base is maintained substantially parallel to the floor pan and in height with respect to the latter and a retractable position in which the base is substantially bearing against the floor pan and in front of the chassis (4),
- a backrest (2) connected by pivot connection (100) to the rear end of the chassis (4), the backrest being angularly movable with respect to the chassis (4) between a rear comfortable position and a retractable position in which the backrest (2) is parallel to the floor pan, the backrest able to occupy between these extreme positions a nominal position in which the backrest forms a slightly obtuse angle with the base and an access rear place position APA in which the backrest (2) forms a slightly acute angle with the base (3), **characterized in that**:
- a connecting rod (23) is provided of which one of the ends is connected to the base (3) and of which the other end is connected to the backrest (2), the securing of the connecting rod (23) with the backrest (2) being achieved by connecting means (50 to 54; 25) allowing, over the angular travel of the backrest between the rear comfortable position and the APA position, an uncoupling of the backrest with respect to the base (3) and allowing to connect the displacement of the backrest (2) and the displacement of the base during their respective displacements towards their retractable position: and **in that**
the connecting means forming rear leg of the base (3) comprise a first coupling link (17) and a second coupling link (18) connected together by a pivot connection (150), the first coupling link (17) being connected to the base (3) and the second coupling link (18) being connected to the chassis (4), the first coupling link (17) being associated to guiding means allowing to decompose the movement of the base (3) during the retractability of the seat (1) into a primary movement in which the rear part of the base is drawn in the direction of the floor pan and into a secondary movement in which the rear part of the base is drawn towards the front of the chassis (4).

2. The retractable seat according to claim 1, **characterized in that** the guiding means comprise an axle (38) connected to the first coupling link (17), the axle (38) being engaged in a curvilinear light (20) which has a first portion (20a) oriented obliquely and downwardly with respect to the floor pan, extended by a second curved portion (20b) the concavity of which is directed towards the floor pan.

3. The retractable seat according to any of claims 1 to 2, **characterized in that** the connecting means of the connecting rod (23) and the backrest (2) comprise an engaging flange (50) having a lumen (51) in which are engaged a distal finger (52) positioned at the end of the connecting rod (23) and a proximal finger (53) positioned on the connecting rod (23) at a distance from the distal finger (52), the distal finger (52) transmitting the rotation of the backrest (2) between the APA position and the retractable position to the connecting rod (23) and the proximal finger (53) transmitting the rotation of the backrest (2) between the retractable position and the APA position to the connecting rod (23).

4. The retractable seat according to claim 3, **characterized in that** the lumen (51) of the engaging flange (50) has
- a primary segment (51 a) in an arc of circle centered on the pivot connection (100) of the backrest (2) on the chassis (4),
- an intermediate segment of arched shape and substantially forming a T with the primary segment (51 a),
- a secondary segment in an arc of circle centered on the pivot connection (100) with a radius lower than that of the primary segment (51 a).

5. The retractable seat according to claim 3 or claim 4, **characterized in that** the connecting means further comprise an arm (54) secured onto the backrest by a pivot connection (190) comprising a first branch (54a) on which is secured a spring (55) retained on the backrest (2) and a second branch (54b) designed to bear against the distal finger (52).

6. The retractable seat according to any of claims 1 to 2,**characterized in that** the means for connecting the connecting rod (23) and the backrest (2) comprise a coaxial connecting piece (25) with the connecting axle of the backrest (2) on the chassis (4), said connecting piece having a bearing path (26) in an arc of circle centered on the rotational axis, the angular opening of the bearing path (26) being delimited by two abutments (28, 29) and a finger secured on the backrest (2) which slides on the bearing path (26),

7. The retractable seat according to claim 6, **characterized in that** the connecting piece (25) has a lug (30) which radially extends forming a lever arm to which the connecting rod (23) is connected.

8. The retractable seat according to claim 7, **characterized in that** the connecting piece (25) is free in rotation with respect to the rotational axis of the backrest (2) with respect to the chassis (4).

9. The retractable seat according to any of claims 1 to 8, **characterized in that** the seat (1) has locking means in deployed position.

10. The retractable seat according to claim 9, **characterized in that** a hook (36) is disposed on the chassis (4), said hook (36) pivoting between a locking position in which the hook (36) is engaged on a pin secured on the base (3) and an unlocking position in which the hook (36), is released from the pin by pivoting.

11. The retractable seat according to any of claims 1 to 10, **characterized in that** the seat (1) has two parallel slides (6), each constituted of a profile section (7) disposed in the floor pan of the vehicle in which is engaged a complementary profile section connected to the chassis (4).
